# EUROPEAN PATENT SPECIFICATION

(11) **EP 4 203 532 B1**
(45) Date of publication and mention of the grant of the patent: **28.10.2026**
(21) Application number: 22198373.7
(22) Date of filing: 13.06.2017
(51) Int. Cl.: H04W 8/20

(54) **PROFILE DOWNLOAD METHOD AND DEVICE**
VERFAHREN UND VORRICHTUNG ZUM HERUNTERLADEN VON PROFILEN
PROCÉDÉ ET DISPOSITIF DE TÉLÉCHARGEMENT DE PROFIL

(30) Priority: 31.10.2016 CN 201610928977; 09.11.2016 WO PCT/CN2016/105237
(43) Date of publication of application: 28.06.2023
(62) Document number(s) of the earlier application(s) in accordance with Art. 76 EPC: 17863817.7 / 3 528 518
(73) Proprietor: Huawei Technologies Co., Ltd., Shenzhen, Guangdong 518129, (CN)
(72) Inventor: LI, Feng, Shenzhen, Guangdong 518129 (CN); LIU, Wen, Shenzhen, Guangdong 518129 (CN); FENG, Chunlai, Shenzhen, Guangdong 518129 (CN); LI, Tao, Shenzhen, Guangdong 518129 (CN); LI, Xiaolin, Shenzhen, Guangdong 518129 (CN); GAO, Xutao, Shenzhen, Guangdong 518129 (CN); LI, Wenhua, Shenzhen, Guangdong 518129 (CN)
(74) Representative: Goddar, Heinz J.

(56) References cited:
- EP-A1- 2 975 871
- EP-A1- 3 024 261
- WO-A1-2017/027115
- GB-A- 2 522 044
- KR-A- 20160 002 326
- US-A1- 2017 156 051

## Description

### TECHNICAL FIELD

Embodiments of this application relate to the field of communications technologies, and more specifically, to a profile download method and a device.

### BACKGROUND

Currently, a removable universal integrated circuit card (UICC) is configured for most mobile devices to operate and access a service provided by a mobile network operator (MNO). The MNO generally allocates one subscriber identification number to each user terminal that uses a UICC card, that is, one subscriber identification number is corresponding to one user terminal. However, with the development of technologies, a quantity of user terminals held by an individual user keeps increasing. Particularly, with an increase of embedded UICC (eUICC) devices, a demand for sharing one subscriber identification number by two or more user terminals of one user (that is, a multiple IMSI single MSISDN (multiple IMSI numbers with a single MSISDN) service) keeps increasing.

When handling the multiple IMSI single MSISDN service, a customer usually needs to go to an MNO customer service center to submit a service application, and a salesperson activates the multiple IMSI single MSISDN service according to the customer application. In this way, the customer needs to spend time and energy on the handling in the customer service center. Consequently, customer experience is poor, and promotion of the MNO service is affected.

If the multiple IMSI single MSISDN service needs to be activated for a device that uses an eUICC, a customer needs to go to a customer service center to scan a quick response code, so as to download a profile (profile) of an MNO network from the MNO network. The profile may be a software-type packet of subscriber information of the MNO subscribed by the device user. To activate the multiple IMSI single MSISDN service, the user needs to confirm and sign a subscription document of the multiple IMSI single MSISDN service on-site. In this way, the customer service center not only needs to add a device for scanning the quick response code, but also needs to train the salesperson in a procedure of provisioning the multiple IMSI single MSISDN service. Financial costs and staff training costs of the operator are high due to a large quantity of customer service centers.

Therefore, how to provide a technology for conveniently downloading the profile and activating the multiple IMSI single MSISDN service to reduce the costs of the user/operator is a technical problem that needs to be urgently resolved by a person skilled in the art.
WO 2017/027115 A1 discloses some methods for provisioning a secondary wireless device with an eSIM for wireless communication and activating multi-SIM functionality between the secondary wireless device and a primary wireless device having a subscribed SIM. The primary wireless device may act as a proxy in obtaining the eSIM for the secondary wireless device. The primary wireless device may then provide, to the cellular network, identifiers of the SIMs of the primary and secondary wireless devices. The primary wireless device may then request initiation of multi-SIM functionality for the two SIMs, and receive an indication that the multi-SIM functionality has been initiated. As an example, the multi-SIM functionality may be implemented by mapping the SIM of the primary wireless device and the SIM of the secondary wireless device (e.g., the provisioned eSIM) to the same Mobile Directory Number (MDN).

### SUMMARY

This specification describes a profile download method and a device, so as to improve convenience of downloading a profile and activating a multiple IMSI single MSISDN service, thereby reducing costs of a user/an operator.

According to a first aspect, an embodiment of this application provides a system of claim 1 and a second device of claim 4. According to second aspect, an embodiment of this application provides a system of claim 5 and a device of claim 6. Further embodiments of this application are disclosed in the dependent claims. Compared with the prior art, the solutions provided in this application may improve convenience of profile download and convenience of multiple IMSI single MSISDN service activation.

### BRIEF DESCRIPTION OF DRAWINGS

To describe the technical solutions in the embodiments of this application more clearly, the following briefly describes the accompanying drawings required for describing the embodiments or the prior art. Apparently, the accompanying drawings in the following description show merely some embodiments of this application, and a person of ordinary skill in the art may still derive other drawings from these accompanying drawings without creative efforts.
FIG. 1 is a schematic diagram of a profile download system helpful for understanding the invention;
FIG. 2 is a schematic diagram of a profile download system helpful for understanding the invention;
FIG. 3 is a schematic diagram of a profile download system helpful for understanding the invention;
FIG. 4 is a schematic diagram of a profile download method helpful for understanding the invention;
FIG. 5 is a schematic diagram of a profile download method helpful for understanding the invention;
FIG. 6A, FIG. 6B, and FIG. 6C are a schematic diagram of a profile download method helpfull for understanding the invention;
FIG. 7 is a component block diagram of a terminal helpful for understanding the invention;
FIG. 8 is a component block diagram of a device helpful for understanding the invention;
FIG. 9 is a flowchart of operations performed by a first device in a profile download method helpful for understanding the invention;
FIG. 10 is a flowchart of operations performed by a second device in a profile download method helpful for understanding the invention;
FIG. 11 is a flowchart of a multiple IMSI single MSISDN service activation method helpful for understanding the invention;
FIG. 12A and FIG. 12B are a schematic diagram of a multiple IMSI single MSISDN service activation helpful for understanding the invention;
FIG. 13 is a flowchart of a multiple IMSI single MSISDN service unbinding method helpful for understanding the invention;
FIG. 14 is a flowchart of a profile download method helpful for understanding the invention;
FIG. 15 is a schematic diagram of a profile download method helpful for understanding the invention;
FIG. 16 is a schematic diagram of a profile download method according to a first embodiment of this application; and
FIG. 17 is a schematic diagram of a profile download method according to a second embodiment of this application.

### DESCRIPTION OF EMBODIMENTS

The following clearly and completely describes the technical solutions in the embodiments of this application with reference to the accompanying drawings in the embodiments of this application. A profile download method and a device provided in the embodiments of this application may be applied to any mobile terminal such as a cellular phone, a PDA (personal digital assistant), a 2G/3G/4G/5G terminal, or a WLAN (wireless local area network) terminal, so as to provide a service such as profile download and multiple IMSI single MSISDN service activation for the device.

In the description of this application, it should be understood that the terms "first", "second", "third", and the like are merely used for a descriptive purpose, and cannot be understood to indicate a primary and secondary relationship, and therefore cannot be construed as a limitation on this application.

A multiple IMSI single MSISDN service is a service that one mobile station international ISDN number MSISDN (Mobile Station International ISDN Number) is corresponding to a plurality of international mobile subscriber identity IMSI (International Mobile Subscriber Identity) numbers, that is, a plurality of mobile terminals may use different SIM cards but share one MSISDN number. When these mobile terminals serve as called parties, a service procedure of the mobile terminals is classified into two procedures: mobile access hunting (Mobile Access Hunting, MAH) and flexible alerting (Flexible Alerting, FA).

FA procedure: A user dials an FA pilot number, and a system rings all called terminals. When any one of the called terminals answers, the system immediately stops ringing the other called terminals. For example, a phone number of a mobile terminal A is bound to a mobile phone number of a mobile terminal B, and the phone number of the mobile terminal A is configured as the FA pilot number. When the user dials the pilot number, the registered mobile terminals A and B ring simultaneously. The ringing mobile terminals A and B herein are referred to as members. After one member answers, the other member stops ringing. The FA pilot number may be a member number of a member piloted by the FA pilot number, or may be a virtual number.

MAH procedure: The user dials an MAH pilot number, and the system first rings a first called terminal according to a ringing sequence set by a called user in a home location register (HLR, Home Location Register). If the first called terminal is not connected, the system rings a next called terminal in sequence until one called terminal answers. Similarly, the MAH pilot number may be a member number of a member piloted by the MAH pilot number, or may be a virtual number.

With the development of technologies, a quantity of user terminals held by an individual user keeps increasing. Particularly, with an increase of wearable devices (for example, a smartwatch and a smart band), a demand for activating the multiple IMSI single MSISDN service between two or more user terminals of one user keeps increasing. Currently, when handling the multiple IMSI single MSISDN service, a customer usually needs to go to an MNO customer service center to submit a service application, and a salesperson activates the multiple IMSI single MSISDN service according to the customer application. This undoubtedly increases costs of the user/an operator.

The wearable device starts to appear in a growing quantity of usage occasions because of a feature of the wearable device such as a small size and portability. However, a function of the wearable device is relatively simple due to the small size and a limited hardware resource of the wearable device. Currently, most wearable devices on sale on the market only have a function such as physiological index monitoring, a time display, an SMS message display, and a Bluetooth call. An eUICC may provide advantages superior to a conventional removable UICC. The eUICC is configured to store an MNO profile (profile) used by a plurality of devices to register with an MNO and interact with the MNO. The profile may be a software-type packet (for example, an eSIM) of subscriber information of the MNO subscribed by a device user. Some eUICCs include a rewritable memory and provide an electronic subscriber identity module (eSIM) that has a function similar to that of the conventional removable subscriber identity module SIM card. The eSIM is more flexible than the SIM card, because the eSIM may be added to the rewritable memory of the eUICC and may be modified in or removed from the rewritable memory of the eUICC. Therefore, emergence of an eUICC technology greatly extends an application of the wearable device in communication services, for example, a call service, an SMS, a voice and video service, and a mail service.

Activating the multiple IMSI single MSISDN service between devices such as a smartphone and a smartwatch implements an FA or MAH telephone service between a plurality of devices of a user. This can significantly improve terminal customer experience. For example, when the mobile phone cannot be used due to a fault, a loss, forgetting, or a power failure, the user can still implement a function such as receiving or making a call by using the watch. This greatly facilitates work and life of the user.

To activate the multiple IMSI single MSISDN service for an intelligent device that uses an eUICC, a problem that is to be first resolved is to download a profile.

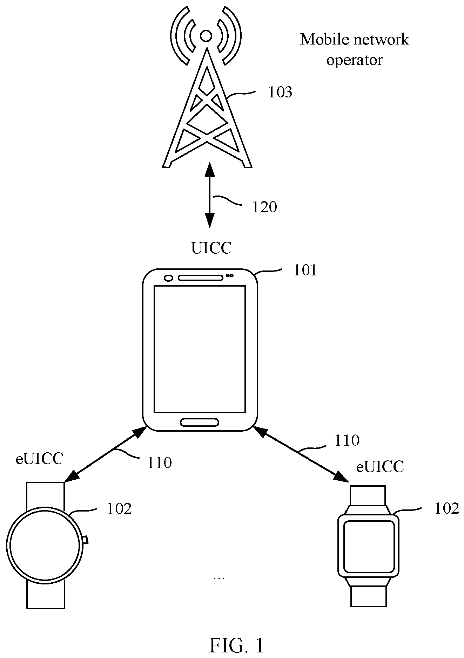

FIG. 1 is a schematic diagram of a profile download system.

Referring to FIG. 1, the profile download system includes a first device (also referred to as a primary device) 101. The first device 101 is equipped with a universal integrated circuit card (UICC) that can be inserted into the first device 101 and that can be removed from the first device 101. The UICC stores personal information of a mobile communication subscriber, such as network access certificate information, a phone book, and an SMS message. When a mobile communications network such as GSM, WCDMA, or LTE is connected, the UICC performs subscriber identification and service security key creation, and therefore allows a secure use of mobile communication. A communication application such as a SIM and a USIM may be installed in the UICC, and other various applications such as a mobile credit card, a mobile wallet, or an electronic passport may be installed in the UICC.

The first device 101 has a radio communication circuit, and may communicate with a mobile network operator (MNO) 103 through a radio link 120 by using a wireless wide area network (Wireless Wide Area Network, WWAN) protocol. The WWAN protocol includes: a GSM/GPRS protocol, a CDMA protocol, an EDGE protocol, an EV-DO protocol, an EV-DV protocol, an HSDPA protocol, an LTE protocol, and the like. The MNO 103 may include at least one of a subscription server, an authorization server, or a BOSS system.

The first device 101 may communicate with a second device 102 by using a short-range wireless communications link 110. For example, the first device 101 may communicate with the second device 102 by using a Bluetooth (Bluetooth), ZigBee, or WiFi (IEEE 802.11) protocol.

FIG. 1 includes more than one second device (also referred to as a secondary device) 102. For example, the second device 102 may include a smartwatch, a smart wrist strap, a smart ring, and the like. The second device 102 uses an embedded UICC (eUICC) that replaces the UICC and that is embedded into the terminal in an irremovable manner. The eUICC includes at least one of an irremovable secure element (Secure Element, SE) or a removable secure element. Because the secure element is installed in the second device 102 in an irremovable manner during manufacturing of the second device 102, it is impossible to install network access authentication information such as an IMSI or a USIM of a specific mobile network operator in advance during manufacturing of the terminal. Therefore, a user who purchases the device can establish such authentication information only after accessing a specific operator. For example, a profile (profile) may be downloaded by using an OTA (over the air) technology and installed in the eUICC.

In addition, contrary to a typical UICC that is only manufactured and started for a specific mobile network operator, the newly introduced eUICC that is embedded into the terminal should securely and flexibly install and manage authentication information of various mobile network operators as the user accesses or leaves a specific mobile network operator or changes to another operator.

The first device 101 of the user has accessed a network of the MNO 103, for example, has purchased the UICC of the MNO 103 and activated a 3G/4G package through real-name registration, and may use the network and an application service of the MNO 103. The second device 102 purchased by the user uses the eUICC, and the user does not want to go to a customer service center and scan a quick response code to download the profile of the operator network from the network of the MNO 103. The first device 101 of the user is already a customer of the MNO 103, and can use the network and the application service of the MNO 103. Therefore, the user wants to use the first device 101 to apply for profile download and activate a multiple IMSI single MSISDN service for the second device 102, so as to implement an FA or MAH telephone service between the first device 101 and the second device 102 of the user.

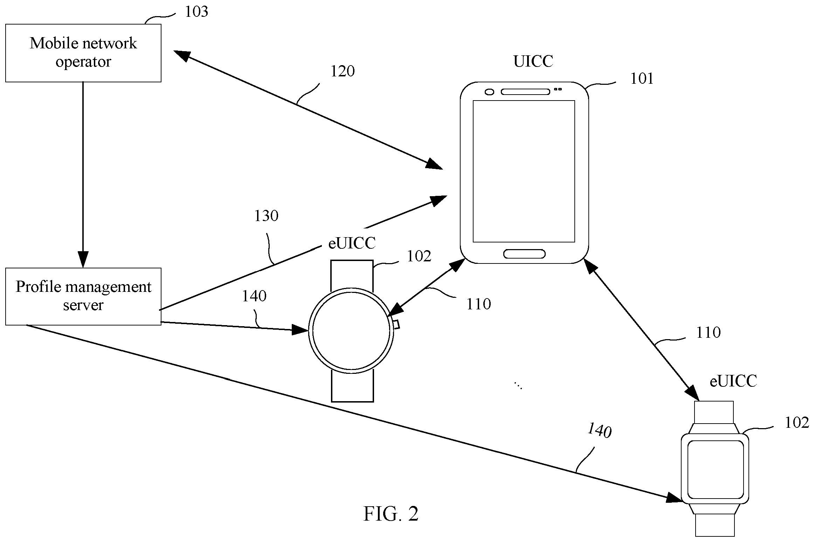

FIG. 2 is a schematic diagram of a profile download system.

Referring to FIG. 2, in step 120, a first device 101 of a user has accessed a network of an MNO 103, and sends a profile download request to the MNO 103. In this case, an eUICC of a second device 102 has not downloaded a profile, and needs to first download the profile from the MNO 103. The first device 101 sends an EID (eUICC identifier) of the second device 102 to the MNO 103.

In step 130, the MNO 103 provides profile download information to the first device 101 by using a profile management server. The profile download information may include an activation code (Activation Code), and the activation code may include an address of the profile server. The first device 101 transfers the activation code to the second device 102 by using a short-range wireless communications link 110. A specific process of downloading the profile by using the activation code is described in detail in a GSMA specification RSP Architecture Version 1.0 (December 23, 2015). Details are not described herein. In an implementation, the profile management server may be a subscription manager-data preparation+ (Subscription Manager Data Preparation, SM-DP+). In another implementation, the profile management server may include a subscription manager-data preparation (Subscription Manager Data Preparation, SM-DP) and a subscription manager-secure routing (Subscription Manager Secure Routing, SM-SR).

The activation code may be a quick response code. The quick response code may be temporarily generated for the user by the profile management server of the operator when the user subscribes to the operator. Alternatively, the quick response code may be generated by the profile management server of the operator in advance. The activation code may carry download information required for achieving target profile download, and the user may obtain the profile download information by using a user terminal to scan the quick response code.

In step 140, the second device 102 scans the activation code to download the profile from the profile management server by using a WiFi network. Alternatively, the second device 102 may use the first device 101 to indirectly access the profile management server by using a Bluetooth connection to the first device 101, and download the profile from the profile management server. After the second device 102 completes profile preparation, the first device 101 may send a multiple IMSI single MSISDN service activation request again to the MNO 103. The multiple IMSI single MSISDN service activation request carries an identifier of the first device 101 and an identifier of the second device 102. The identifier of the first device 101 may be an integrated circuit card identifier (Integrate Circuit Card Identity, ICCID), an MSISDN, and an IMSI of the first device 101. The identifier of the second device 102 may be the EID (eUICC identifier), an MSISDN, and an IMSI of the second device 102. Afterward, the MNO 103 activates the multiple IMSI single MSISDN service according to the identifier of the first device 101 and the identifier of the second device 102, so as to implement an FA or MAH telephone service between the first device 101 and the second device 102 of the user.

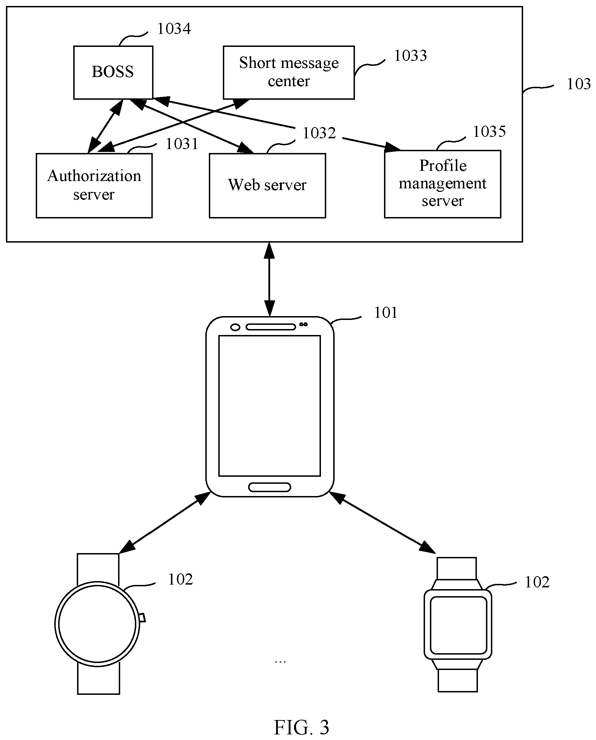

FIG. 3 is a schematic diagram of a profile download system.

Referring to FIG. 3, the profile download system includes a first device 101 and a second device 102. An authorization server (Authorization Server, AS) 1031, a web server (Web Server) 1032, a profile management server 1035, a BOSS system 1034, a short message center 1033, and the like are deployed in an operator network 103.

The BOSS is short for Business & Operation Support System, that is, a business and operation support system. Generally, the BOSS system is divided into four parts: a billing and settlement system, an operating and accounting system, a customer service system, and a decision support system. The BOSS system bears a service system, a CRM system, and a billing system of an MNO.

The authorization server (Authorization Server, AS) 1031 is mainly configured to perform authentication (authentication) on the first device 101 to verify validity of the first device 101. An authentication operation may be performed by using an extensible authentication protocol that is based on a Global System for Mobile Communications identity authentication module and an extensible authentication protocol that is based on 3rd Generation Mobile Communication Authentication and Key Agreement (Authentication Protocol for 3G Authentication and Key Agreement, EAP-AKA) in a cellular mobile network. The authentication operation may alternatively use a verification code method. For example, the MNO randomly generates a verification code, and sends, by using the short message center 1033, an SMS message to a mobile phone number used by the first device 101 of a user, so as to notify the user of the verification code. The user enters the verification code to perform secondary verification, so as to ensure subscriber identity correctness.

The web server (Web Server) 1032 is mainly responsible for a network subscription operation of the user. For example, the web server 1032 returns a contracted page to the first device 101. The contracted page includes a service term of the operator about downloading a profile or activating a multiple IMSI single MSISDN service. The contracted page further includes a click box for contract approval and a click box for contract disapproval. If the user clicks the click box for contract approval, the operator starts to prepare the profile and/or activate the multiple IMSI single MSISDN service for the user.

The profile management server may generate profile download information and the profile for the user. The profile management server may include at least one of network side devices such as an SM-DS, an SM-DP, an SM-SR, or an SM-DR.

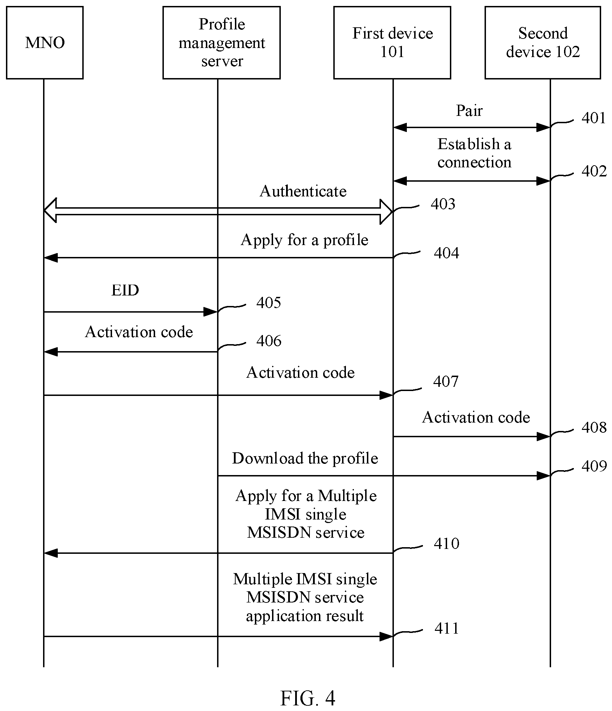

FIG. 4 is a schematic diagram of a profile download method.

Referring to FIG. 4, in step 401, a first device 101 performs a Bluetooth pairing operation with a second device 102, and the pairing operation may be implemented by using a UI interface of the first device 101. Afterward, in step 402, a Bluetooth connection is established between the first device 101 and the second device 102 to transmit data, and the first device 101 may obtain an EID (eUICC identifier) of the second device 102 by using the Bluetooth connection. In step 403, the first device 101 and an MNO perform an authentication operation to verify validity of the first device 101. The authentication operation may use a verification code method. For example, the MNO randomly generates a verification code, and sends an SMS message to a mobile phone number used by the first device 101 of a user, so as to notify the user of the verification code. The user enters the verification code to perform secondary verification, so as to ensure subscriber identity correctness. The authentication operation in step 404 may alternatively use card-based EAP-SIM/AKA authentication. The first device 101 completes authentication according to an authentication protocol, and accesses a network of the MNO. In step 404, the first device 101 sends a profile obtaining request to the MNO, where the profile obtaining request carries the EID (eUICC identifier) of the second device. In step 405, the MNO transfers the EID to a profile management server. In step 405, the MNO transfers the EID to the profile management server, and the profile management server prepares a profile activation code that matches the EID, and transfers the activation code to the MNO in step 406. In step 407, the MNO transfers the activation code to the first device 101. In step 408, the first device 101 transfers the activation code to the second device 102. In step 409, the second device 102 obtains a profile by using a WiFi network or by establishing a connection to the profile management server by using the first device 101. In step 410, the first device 101 sends a multiple IMSI single MSISDN service application to the MNO, where the multiple IMSI single MSISDN service application carries an identifier of the first device 101 and an identifier of the second device 102. The identifier of the first device 101 may be an integrated circuit card identifier (Integrate Circuit Card Identity, ICCID), an MSISDN, and an IMSI. The identifier of the second device 102 may be the EID (eUICC identifier), an MSISDN, and an IMSI. Afterward, the MNO 103 activates the multiple IMSI single MSISDN service according to the identifier of the first device 101 and the identifier of the second device 102. In this way, the MSISDN of the first device 101 may be corresponding to the IMSI of the first device 101 and the IMSI of the second device 102, so as to implement an FA or MAH telephone service between the first device 101 and the second device 102 of the user.

It should be noted that step 403 in FIG. 4 may occur before step 401 and step 402, that is, the first device 101 is authenticated by the mobile network operator before the first device 101 and the second device 102 are paired.

If the user has a plurality of second devices 102, the user may apply for the multiple IMSI single MSISDN service for the first device 101 and the plurality of second devices 102 according to the method in FIG. 4.

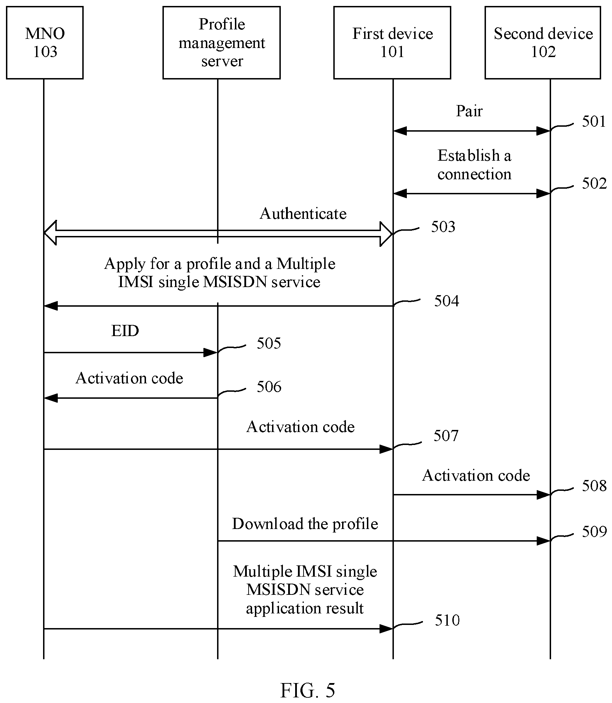

FIG. 5 is a schematic diagram of a profile download method according to another embodiment of this application.

Referring to FIG. 5, step 501 to step 503 are similar to step 401 to step 403 in FIG. 4, and details are not described herein. In step 504, a first device 101 may trigger a profile download procedure when applying to an MNO 103 for a multiple IMSI single MSISDN service. The first device 101 provides an identifier (for example, an integrated circuit card identifier (Integrate Circuit Card Identity, ICCID), an MSISDN, and an IMSI) of the first device and an EID of a second device 102 for the MNO 103. The MNO 103 activates the multiple IMSI single MSISDN service according to the identifier of the first device 101 and the EID of the second device 102. Step 506 to step 509 are similar to step 406 to step 409 in FIG. 4, and details are not described herein. In step 509, the MNO 103 notifies the first device 101 of a multiple IMSI single MSISDN service application result. It should be noted that step 503 in FIG. 5 may occur before step 501 and step 502, that is, the first device 101 is authenticated by the mobile network operator before the first device 101 and the second device 102 are paired.

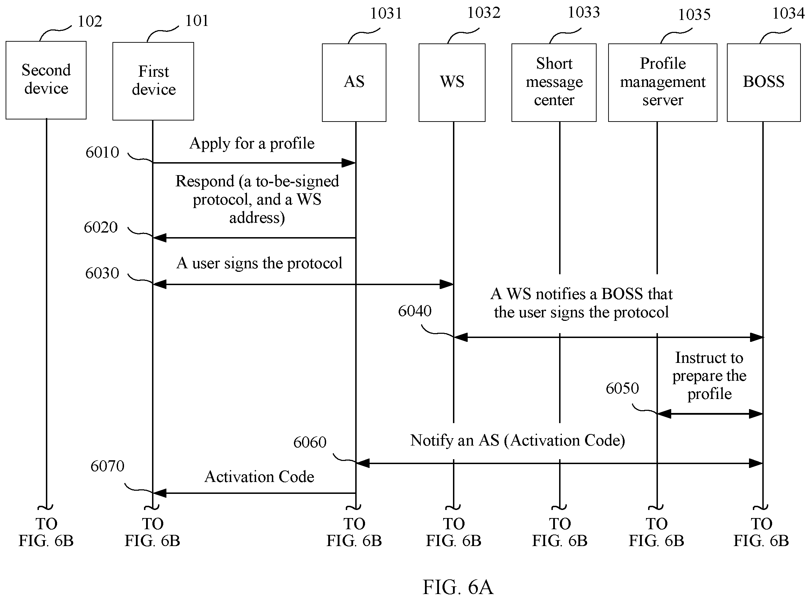

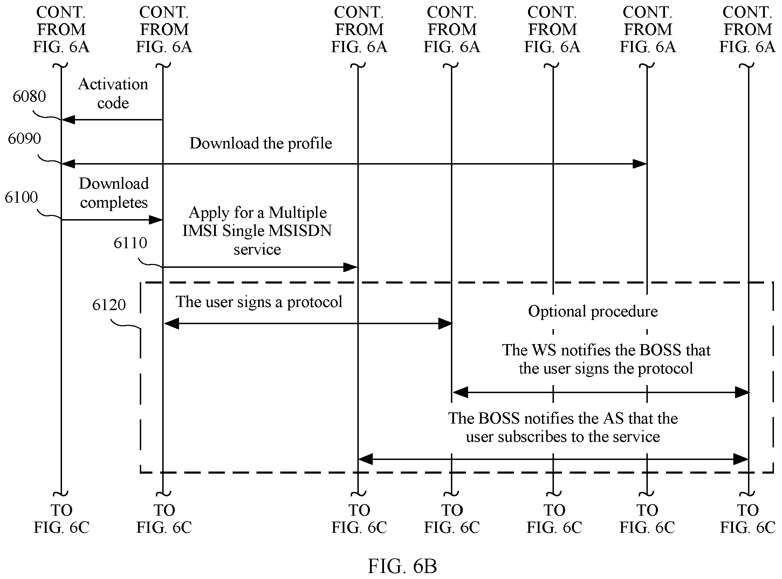

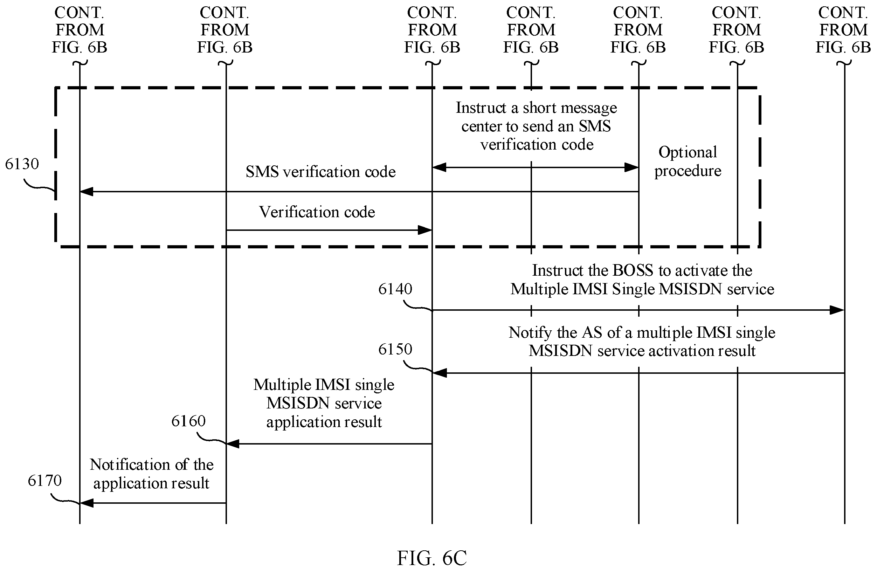

FIG. 6A, FIG. 6B, and FIG. 6C are a schematic diagram of a profile download method according to another embodiment of this application.

In step 6010, a first device 101 sends a profile obtaining request to an authorization server (Authorization Server, AS) 1031. The profile obtaining request carries an EID (eUICC identifier) of a second device 102, and the EID is a unique identifier allocated to each eUICC and is an unchangeable value.

In step 6020, the authorization server 1031 detects that a user does not sign a contract, and sends a contracted web page (contracted web page) website to the first device 101.

In step 6030, the first device 101 opens the contracted web page by using a web browser, and the contracted web page prompts the user whether to sign a contract with an operator, for example, displays a contract term, a click box for contract approval, and a click box for contract disapproval. The first device 101 obtains a subscription result of the user and sends the subscription result to a web server 1032. If the user clicks the click box for contract approval, it indicates that user subscription succeeds, and step 6040 is to be performed. If the user clicks the click box for contract disapproval, it indicates that the user disapproves the contract, and the process ends.

In step 6040, the WS 1032 sends the subscription result of the user to a BOSS system 1034.

In step 6050, the BOSS system 1034 instructs a profile management server 1035 to prepare a profile and profile download information (an activation code).

In step 6060, the BOSS system 1034 sends the activation code (Activation Code) to the authorization server 1031.

In step 6070, the authorization server 1031 sends the activation code (Activation Code) to the first device 101.

In step 6080, the first device 101 sends the activation code to the second device 102.

In step 6090, the second device 102 downloads the profile from the profile management server 1035 by using a radio link.

In step 6100, the second device 102 notifies the first device 101 that the profile is downloaded successfully.

In step 6110, the first device 101 sends a multiple IMSI single MSISDN service activation request to the authorization server (Authorization Server, AS) 1031, where the request carries an identifier of the first device 101 and an identifier of the second device 102. The identifier of the first device 101 may be an integrated circuit card identifier (Integrate Circuit Card Identity, ICCID), an MSISDN, and an IMSI. The identifier of the second device 102 may be the EID (eUICC identifier), an MSISDN, and an IMSI.

Step 6120 is an optional procedure. Optionally, the authorization server (Authorization Server, AS) 1031 learns, from the BOSS system 1034 of the operator, whether the user needs secondary subscription, and sends the contracted website to the first device 101 if the secondary subscription is needed. A specific subscription procedure is not described again. According to a service requirement of the operator, the operator may make a profile download process and a multiple IMSI single MSISDN service activation process be two independent operations. To activate the two operations, the user needs to separately sign corresponding protocols.

Step 6130 is an optional procedure. Optionally, SMS verification code verification is performed on the second device 102. The authorization server (Authorization Server, AS) 1031 instructs a short message center 1033 to send an SMS verification code to the first device 102, and the user sends the verification code to the authorization server (Authorization Server, AS) 1031 by using the first device 101, so as to verify validity of the second device 102.

In step 6140, the authorization server 1031 applies to the BOSS system 1034 for a multiple IMSI single MSISDN service for the first device 101 and the second device 102. The BOSS system 1034 is responsible for processing the multiple IMSI single MSISDN service of the first device 101 and the second device 102. In this case, the mobile station international ISDN number MSISDN (Mobile Station International ISDN Number) of the first device 101 is corresponding to the IMSI (International Mobile Subscriber Identity) number of the first device 101 and the IMSI number of the second device 102. That is, the first device 101 and the second device 102 may share one MSISDN number.

In step 6150, the BOSS system 1034 sends a multiple IMSI single MSISDN service activation result to the authorization server 1031.

In step 6160, the authorization server (Authorization Server, AS) 1031 sends the multiple IMSI single MSISDN service activation result to the first device 101.

In step 6170, the first device 101 sends the multiple IMSI single MSISDN service activation result to the second device 102.

Optionally, before step 6010, the first device 101 further needs to be authenticated by an MNO network. The authentication may use the EAP-SIM/AKA authentication or SMS verification code authentication mentioned above.

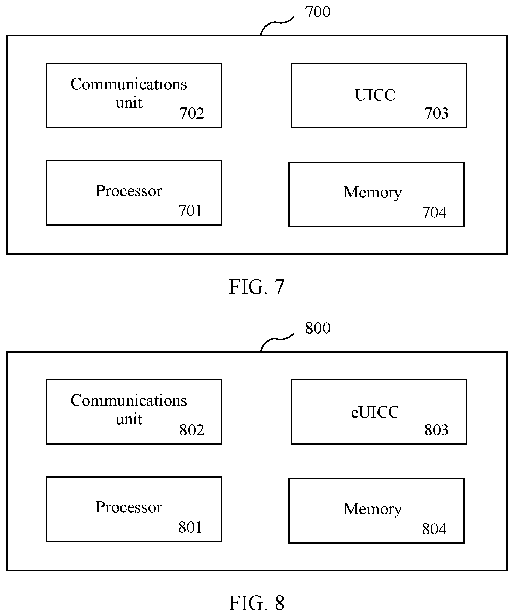

FIG. 7 is a component block diagram of a terminal.

FIG. 7 shows a terminal 700. The terminal 700 includes a processor 701, a communications unit 702, a UICC 703, and a memory 704. The terminal 700 may be the first device 101 in FIG. 1 to FIG. 3. The communications unit 702 may support a short-range communications protocol such as Wi-Fi (wireless fidelity, Wireless Fidelity), Bluetooth (BT: Bluetooth), and Near Field Communication (NFC: near field communication), or support the Internet (Internet), a local area network (LAN: local area network), a wide area network (WAN: wire area network), a telecommunication network (telecommunication network), a cellular network (cellular network), a satellite network (satellite network), and the like. The communications unit 702 may further include a circuit that enables the terminal 700 to be coupled to another device (for example, a computer) and communicate with the another device in a wired or wireless manner.

The processor 701 is configured to execute an instruction (for example, an instruction obtained from a touchscreen), interrupt handling, timing, and other functions. In addition, the processor 701 may further include a graphics processing unit (graphic processing unit).

The terminal 700 may further include the memory (not shown), configured to store an instruction or data that is received by the processor 701 or another component (for example, an input module, a display module, or the communications unit), or generated by the processor 701 or another component.

The processor 701 is configured to: obtain an embedded integrated circuit card identifier (EID) of a secondary device (that is, the second device 102 in this specification), where the EID is used by a primary device to obtain, from a mobile operator server, profile download information that matches the EID; receive, from the mobile operator server, the profile download information that matches the EID; and send the profile download information to the secondary device, where the profile download information is used by the secondary device to download a profile from a profile management server, and the profile is installed in an embedded UICC (eUICC) of the secondary device after the download is complete.

The processor 701 is further configured to perform a corresponding function in the methods performed by the first device in FIG. 4 to FIG. 6A, FIG. 6B, and FIG. 6C.

The processor 701 is further configured to send a multiple IMSI single MSISDN (multiple IMSI numbers with a single MSISDN) service activation request to the mobile operator server, where the multiple IMSI single MSISDN service activation request carries an identifier of the primary device and an identifier of the secondary device, the identifier of the primary device includes any one of an integrated circuit card identifier (Integrate Circuit Card Identity, ICCID), a mobile station international ISDN number MSISDN, and an international mobile subscriber identity IMSI, and the identifier of the secondary device includes any one of the EID, an MSISDN, and an IMSI.

The EID is obtained by the terminal by using a Bluetooth connection or a WiFi connection between the terminal and the secondary device.

The processor 701 is further configured to authenticate the terminal with a mobile network operator. An authentication manner may be Extensible Authentication Protocol-subscriber identity module/Authentication and Key Agreement EAP-SIM/AKA authentication or SMS verification code authentication.

The processor 701 is further configured to: perform a pairing operation with the secondary device, and send a profile download request for the secondary device to the mobile operator server. The profile download request carries the EID.

The secondary device receives the profile download information, and according to the profile download information, downloads the profile from the profile management server and installs the profile. The terminal 700 obtains the EID (eUICC identifier) of the secondary device by using the connection (for example, the Bluetooth connection or the WiFi connection) between the terminal 700 and the secondary device.

FIG. 8 is a component block diagram of a device according to another embodiment of this application.

FIG. 8 shows a device 800. The device 800 includes a processor 801, a communications unit 802, an eUICC 803, and a memory 804. The device 800 may be the second device 102 in FIG. 1 to FIG. 3.

The communications unit 802 may support a short-range communications protocol such as Wi-Fi (wireless fidelity, Wireless Fidelity), Bluetooth (BT: Bluetooth), and Near Field Communication (NFC: near field communication), or support the Internet (Internet), a local area network (LAN: local area network), a wide area network (WAN: wire area network), a telecommunication network (telecommunication network), a cellular network (cellular network), a satellite network (satellite network), and the like. The communications unit 802 may further include a circuit that enables the device 800 to be coupled to another device (for example, a computer) and communicate with the another device in a wired or wireless manner.

The processor 801 is configured to execute an instruction (for example, an instruction obtained from a touchscreen), interrupt handling, timing, and other functions. In addition, the processor 801 may further include a graphics processing unit (graphic processing unit).

The device 800 may further include the memory (not shown), configured to store an instruction or data that is received by the processor 801 or another component (for example, an input module, a display module, or the communications unit), or generated by the processor 801 or another component.

The processor 801 is configured to: send an EID (eUICC identifier) of the second device 102 to a first device 101; receive, from the first device 101, profile download information that matches the EID; and according to the profile download information, download a profile from a profile management server and install the profile. The profile download information may be a quick response code. The second device identifies the quick response code to obtain information such as an address of the profile management server, so as to start to download the profile. The second device 102 transfers the EID (eUICC identifier) of the second device 102 to the first device 101 by using a connection (for example, a Bluetooth connection or a WiFi connection) between the first device 101 and the second device 102.

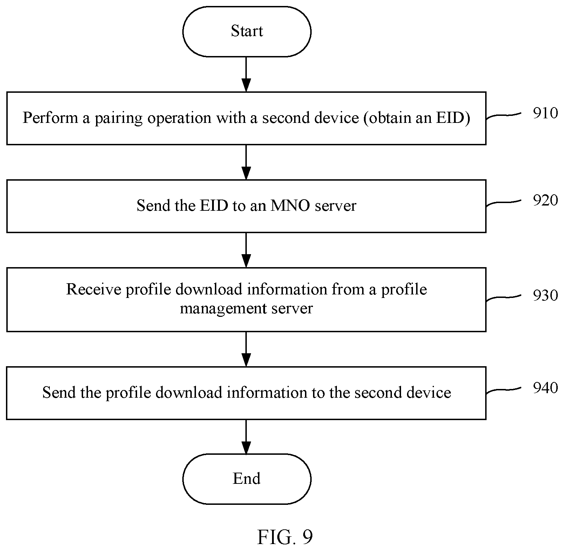

FIG. 9 is a flowchart of operations performed by a first device in a profile download method.

Referring to FIG. 9, in step 910, a first device performs a pairing operation with a second device. The pairing operation may use a Bluetooth or WiFi technology, but is not limited thereto. When the first device performs the pairing operation with the second device, the second device may transfer an EID of the second device to the first device. In step 920, the first device sends the EID of the second device to an MNO server, and then the MNO server sends the EID of the second device to a profile management server. In step 930, the first device receives download information from the profile management server. In step 950, the profile download information is sent to the second device. Afterward, according to the profile download information, the second device may download a profile from the profile management server and install the profile in an eUICC.

It should be noted that the first device 101 needs to be authenticated by a mobile network operator before step 910 in FIG. 9, that is, the first device 101 is authenticated by the mobile network operator before the first device 101 and the second device 102 are paired. An authentication manner may be an EAP-SIM/AKA manner or an SMS verification code manner.

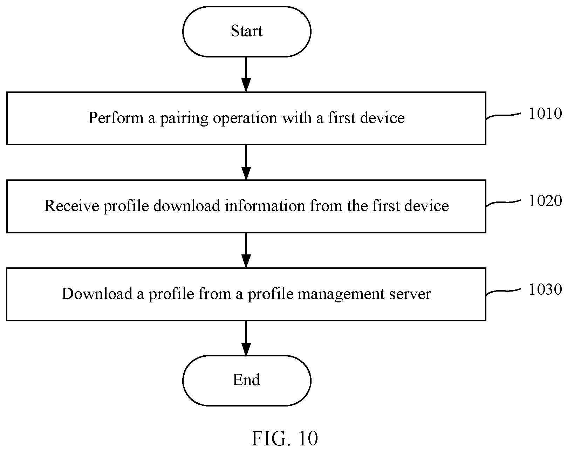

FIG. 10 is a flowchart of operations performed by a second device in a profile download method.

Referring to FIG. 10, in step 1010, a second device performs a pairing operation with a first device. The pairing operation may use a Bluetooth or WiFi technology, but is not limited thereto. When the first device performs the pairing operation with the second device, the second device may transfer an EID of the second device to the first device. In this case, the first device transfers the EID to a profile management server by using an MNO server, so as to obtain profile download information and transfer the profile download information to the second device. According to the profile download information, the second device may download a profile from the profile management server and install the profile in an eUICC.

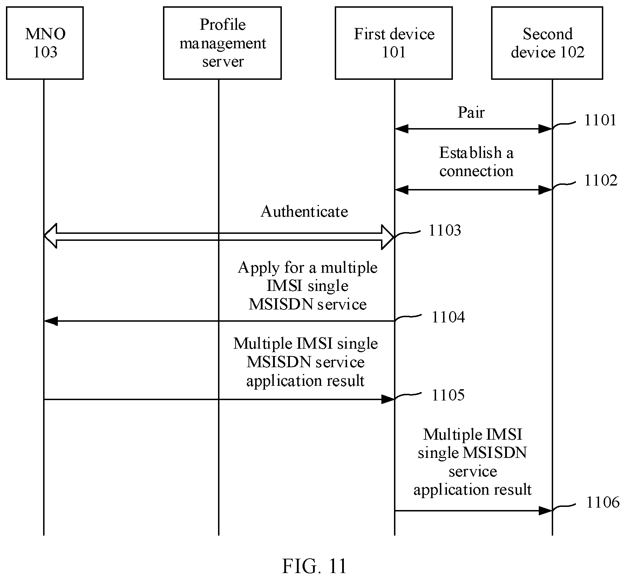

FIG. 11 is a flowchart of a multiple IMSI single MSISDN service activation method.

In FIG. 11, both a first device 101 and a second device 102 are UICC devices. The first device 101 has accessed a network of an MNO 103, for example, has purchased a UICC of the MNO 103 and activated a 3G/4G package through real-name registration, and may use the network and an application service of the MNO 103. The second device 102 purchased by a user also uses the UICC, and the user wants to activate a multiple IMSI single MSISDN service for the first device 101 and the second device 102. In this case, a mobile station international ISDN number MSISDN (Mobile Station International ISDN Number) of the first device 101 is corresponding to an IMSI (International Mobile Subscriber Identity) number of the first device 101 and an IMSI number of the second device 102. That is, the first device 101 and the second device 102 may share one MSISDN number.

Referring to FIG. 11, step 1101 to step 1103 are similar to step 401 to step 403 in FIG. 4, and details are not described herein. In step 1104, the first device 101 may apply to the MNO 103 for the multiple IMSI single MSISDN service, and the first device 101 provides an identifier (for example, an integrated circuit card identifier (Integrate Circuit Card Identity, ICCID), an MSISDN, and an IMSI) of the first device and an identifier (for example, an integrated circuit card identifier (Integrate Circuit Card Identity, ICCID), an MSISDN, and an IMSI) of the second device 102 for the MNO 103. The MNO 103 activates the multiple IMSI single MSISDN service according to the identifier of the first device 101 and the identifier of the second device 102. In step 1105, the MNO 103 notifies the first device 101 of a multiple IMSI single MSISDN service application result. In step 1106, the first device 101 notifies the second device 102 of the multiple IMSI single MSISDN service application result.

It should be noted that step 1103 in FIG. 11 may occur before step 1101 and step 1102, that is, the first device 101 is authenticated by the mobile network operator before the first device 101 and the second device 102 are paired. The authentication may use the EAP-SIM/AKA authentication or SMS verification code authentication mentioned above. A sequence of the steps should not impose a limitation on this application.

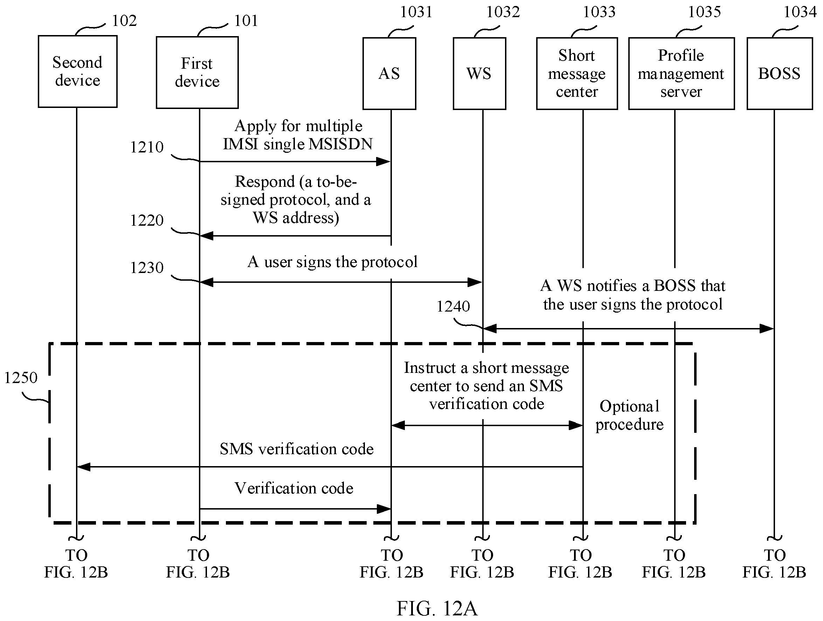

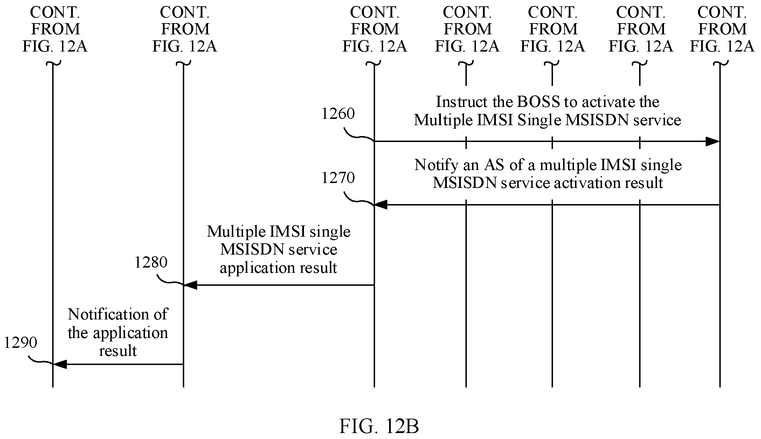

FIG. 12A and FIG. 12B are a schematic diagram of a multiple IMSI single MSISDN service activation method according to another embodiment of this application.

Referring to FIG. 12A and FIG. 12B, step 1210 to step 1240 are similar to step 6010 to step 6040 in FIG. 6A, FIG. 6B, and FIG. 6C, and details are not described herein. In step 1210, an identifier of a first device 101 and an identifier of a second device 102 are carried. The second device 102 is a UICC device. Therefore, the identifier of the first device herein includes any one of an integrated circuit card identifier (Integrate Circuit Card Identity, ICCID), an MSISDN, and an IMSI). The identifier of the second device 102 includes any one of an integrated circuit card identifier (Integrate Circuit Card Identity, ICCID), an MSISDN, and an IMSI.

Step 1250 is an optional procedure. Optionally, SMS verification code verification is performed on the second device 102. An authorization server (Authorization Server, AS) 1031 instructs a short message center 1033 to send an SMS verification code to the second device 102, and a user sends the verification code to the authorization server (Authorization Server, AS) 1031 by using the first device 101, so as to verify validity of the second device 102.

Step 1260 to step 1290 are similar to step 6140 to step 6170 in FIG. 6A, FIG. 6B, and FIG. 6C, and details are not described herein. The authorization server 1031 applies to a BOSS system 1034 for a multiple IMSI single MSISDN service for the first device 101 and the second device 102. The BOSS system 1034 is responsible for processing the multiple IMSI single MSISDN service of the first device 101 and the second device 102. In this case, a mobile station international ISDN number MSISDN (Mobile Station International ISDN Number) of the first device 101 is corresponding to an IMSI (International Mobile Subscriber Identity) number of the first device 101 and an IMSI number of the second device 102. That is, the first device 101 and the second device 102 may share one MSISDN number.

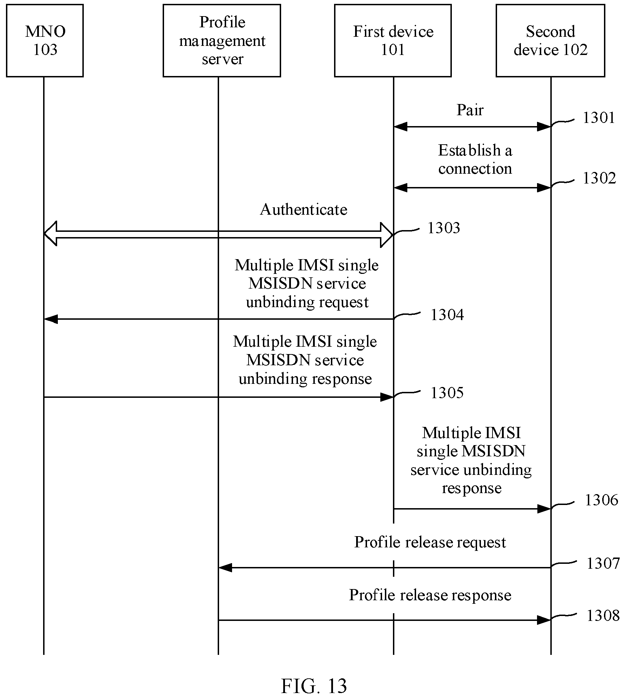

FIG. 13 is a flowchart of a multiple IMSI single MSISDN service unbinding method.

In FIG. 13, step 1301 to step 1303 are the same as step 401 to step 403 in FIG. 4. In step 1304, a first device 101 may apply to an MNO 103 for a multiple IMSI single MSISDN service unbinding operation, that is, to unbind a multiple IMSI single MSISDN service binding relationship between the first device 101 and a second device 102. The first device 101 provides an identifier (for example, an integrated circuit card identifier (Integrate Circuit Card Identity, ICCID), an MSISDN, and an IMSI) of the first device and an identifier (for example, an EID, an MSISDN, and an IMSI) of the second device 102 for the MNO 103. The MNO 103 unbinds the multiple IMSI single MSISDN service binding relationship between the first device 101 and the second device 102 according to the identifier of the first device 101 and the identifier of the second device 102. In step 1305, the MNO 103 notifies the first device 101 of a multiple IMSI single MSISDN service unbinding operation result. In step 1306, the first device 101 notifies the second device 102 of the multiple IMSI single MSISDN service unbinding operation result. Optionally, in step 1307, the second device 102 sends a profile release request to a profile management server. In step 1308, the second device 102 receives a profile release result from the profile management server. The second device 102 may delete a profile stored in an eUICC.

It should be noted that step 1303 in FIG. 13 may occur before step 1301 and step 1302, that is, the first device 101 is authenticated by the mobile network operator before the first device 101 and the second device 102 are paired. The authentication may use the EAP-SIM/AKA authentication or SMS verification code authentication mentioned above. A sequence of the steps should not impose a limitation on this application.

The foregoing mainly describes a process in which an eUICC device performs authentication and downloads a profile by using a UICC device. For an electronic device that has both a universal integrated circuit card UICC and an embedded UICC (eUICC), a method similar to the above may be used. Authentication is performed by using the embedded UICC of the electronic device, and after the authentication succeeds, a profile is downloaded and installed in the eUICC.

A specific solution includes: The electronic device gets, based on the UICC, authenticated by a mobile operator network; receives authentication completion information (for example, an SMS verification code or authentication success information) from the mobile operator network; sends, based on the authentication completion information, an embedded integrated circuit card identifier (EID) of the eUICC to the mobile operator network, where the EID is used by the electronic device to obtain, from a server of the mobile operator network, profile download information that matches the EID; receives the profile download information from the server of the mobile operator network; and downloads the profile from a profile management server according to the profile download information, where the profile is installed in the eUICC of the electronic device after the download is complete.

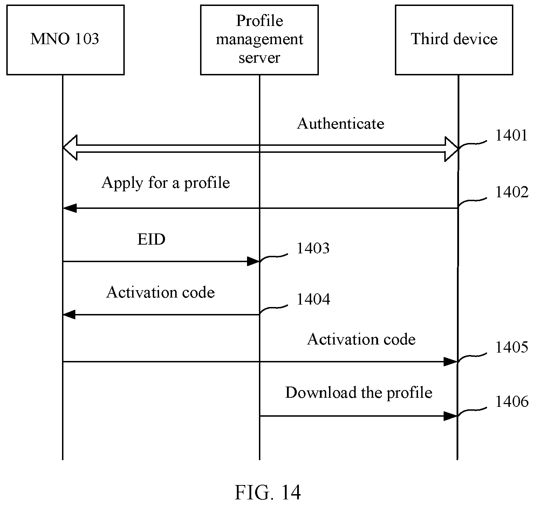

FIG. 14 is a flowchart of a profile download method according to another embodiment of this application.

In FIG. 14, a third device supports both a UICC and an eUICC (for example, the third device has a SIM card slot and is preconfigured with an embedded subscriber identity module (eSIM) chip). The third device may have at least one SIM card slot and at least one eSIM chip.

A user of the third device has accessed a network of an MNO 103, for example, has purchased a UICC card of the MNO 103 and activated a 3G/4G package through real-name registration. The user may use the network and an application service of the MNO 103 by inserting the UICC card into the SIM card slot. The user further needs to download a profile for the eUICC to activate a communication service of the eUICC. By using a SIM card installed in the third device, the operator may verify validity of the user and download the profile of the eUICC for the authorized user.

Referring to FIG. 14, in step 1401, the third device and the MNO 103 perform an authentication operation to verify validity of the third device. The authentication operation may use a verification code method. For example, the MNO randomly generates a verification code, and sends an SMS message to a mobile phone number used by the UICC card of the third device of the user, so as to notify the user of the verification code. The user enters the verification code to perform secondary verification, so as to ensure subscriber identity correctness. The authentication operation in step 1401 may alternatively use SIM card-based EAP-SIM/AKA authentication. The third device completes authentication according to an authentication protocol.

In step 1402, if the authentication of the third device succeeds in step 1401, the third device may apply to the MNO 103 for a profile for the eUICC of the third device. The third device provides an eUICC identifier (EID) of the third device for the MNO 103 to obtain the profile.

In step 1403, the MNO 103 transfers the EID of the third device to a profile management server. The profile management server prepares a profile activation code that matches the EID, and transfers the activation code to the MNO 103 in step 1404. In step 1405, the MNO 103 transfers the activation code to the third device. In step 1406, the third device establishes a connection to the profile management server by using a network, and obtains the profile of the eUICC.

It should be noted that FIG. 14 only describes a process of verifying the validity of the third device by using the UICC of the third device and downloading the profile for the eUICC of the third device. Optionally, in step 1402, the third device may apply to the MNO 103 for both profile download and a multiple IMSI single MSISDN service, that is, transfer identification information (for example, an ICCID, an MSISDN, and an IMSI) of the SIM card and the identifier EID of the eUICC. A specific application process is similar to that of FIG. 5, and details are not described herein. After the multiple IMSI single MSISDN service is activated, the UICC card and the eUICC of the third device may share one MSISDN number.

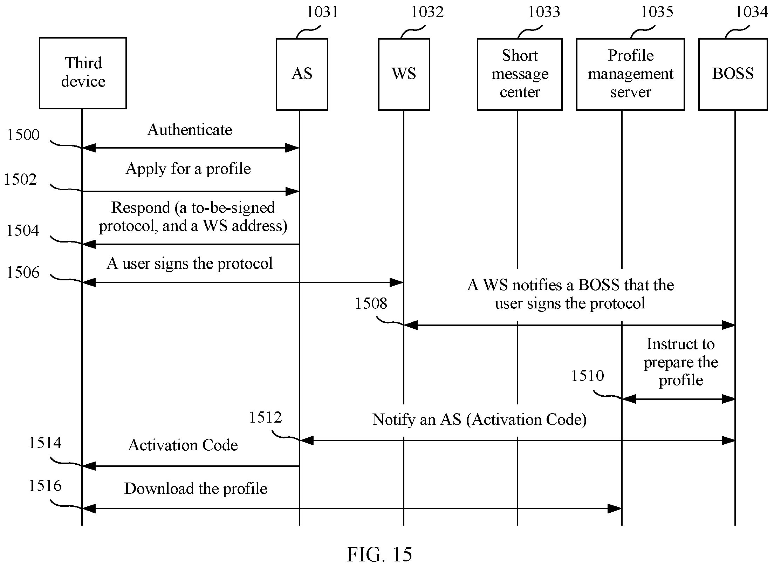

FIG. 15 is a schematic diagram of a profile download.

Referring to FIG. 15, in step 1500, an authorization server 1031 verifies validity of a third device. Specifically, authentication may be performed on a UICC card of the third device by using the EAP-SIM/AKA authentication or SMS verification code authentication manner mentioned above.

Step 1502 to step 1514 are similar to step 6010 to step 6070 in FIG. 6A, FIG. 6B, and FIG. 6C, and details are not described herein. In step 1502, a profile download request sent by the third device to the authorization server carries an identifier (EID) of an eUICC of the third device.

In step 1516, the third device downloads a profile from a profile management server 1035 by using an activation code obtained in step 1514. Then, after the third device completes profile activation, the eUICC of the third device takes effect, and the third device may use the eUICC to obtain a communication service.

An embodiment of this application provides another terminal to implement various functions of the third device in FIG. 15. The terminal includes: a communications unit, a universal integrated circuit card UICC, an embedded UICC (eUICC), and a processor. The processor is configured to: authenticate, based on the UICC, the electronic device with a mobile operator network; obtain authentication completion information from the mobile operator network; based on the authentication completion information, control the communications unit to send an embedded integrated circuit card identifier (EID) of the eUICC to the mobile operator network, where the EID is used by the electronic device to obtain, from a server of the mobile operator network, profile download information that matches the EID; obtain the profile download information from the server of the mobile operator network; and download a profile from a profile management server according to the profile download information, where the profile is installed in the eUICC of the electronic device after the download is complete.

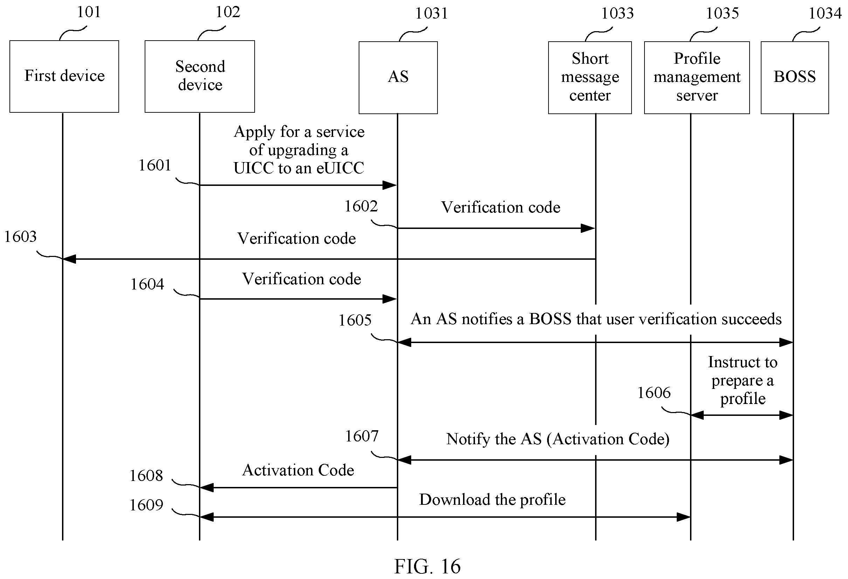

FIG. 16 is a schematic diagram of a profile download method according to another embodiment of this application.

In FIG. 16, a first device 101 and a second device 102 belong to a same user. The first device 101 has a same function as the first device 101 in FIG. 1, and the second device 102 has a same function as the second device 102 in FIG. 1. A universal integrated circuit card (UICC) that can be inserted into the first device 101 and can be removed from the first device 101 is installed in the first device 101. The second device 102 uses an embedded UICC (eUICC) that replaces the UICC and that is embedded into the second device 102 in an irremovable manner.

The second device 102 is a device newly purchased by the user for replacing the old first device 101, and the user wants to still use an original phone number after the device is replaced. After the second device 102 receives an eUICC service upgrade request entered by the user, downloads a profile, and completes profile activation, the new card (for example, the eUICC of the second device 102) takes effect, and the old card (for example, the UICC of the first device 101) becomes invalid. This is similar to a 4G card replacement service (that is, the user discards an old SIM card, and uses a new SIM card) in an existing service of an operator. However, the second device 102 herein uses the embedded UICC (eUICC) that is embedded into the terminal and irremovable. Therefore, a procedure is different.

The second device 102 sends a profile obtaining request (also referred to as an "eUICC upgrade request") to a server of a mobile operator network. The profile obtaining request carries an embedded integrated circuit card identifier (EID) of the second device 102 and a mobile station international ISDN number MSISDN of the first device 101. The EID is used by the second device 102 to obtain, from the server of the mobile operator network, profile download information that matches the EID. The second device 102 sends a verification code to the server of the mobile operator network. The verification code is a verification code received by the first device 101 (for example, the user may use the second device 102 to manually enter the verification code received by the first device 101, or the user may use the second device 102 to obtain, by using short-range communication (for example, NFC) or in a manner of scanning a quick response code, the verification code received by the first device 101). The second device 102 receives the profile download information from the mobile operator server. The second device 102 downloads the profile from a profile management server according to the profile download information. The profile is installed in the embedded UICC (eUICC) of the second device 102 after the download is complete.

Referring to FIG. 16, in step 1601, the second device 102 sends an "upgrade to an eUICC" request to an authorization server 1031. The "upgrade to an eUICC" request carries the mobile station international ISDN number MSISDN of the user and the embedded integrated circuit card identifier (EID) of the second device 102.

In step 1602, the authorization server 1031 generates the verification code and sends the verification code to a short message center 1033.

In step 1603, the short message center 1033 sends the verification code to the first device 101 of the user in an SMS message manner, so as to notify the user of the verification code.

In step 1604, the second device 102 receives the verification code entered by the user, and sends the verification code to the authorization server 1031. Then, the authorization server 1031 verifies the verification code. If the verification succeeds, in step 1605, the authorization server 1031 notifies a BOSS 1034 that the user verification succeeds.

In step 1606, the BOSS system 1034 instructs the profile management server 1035 to prepare the profile and the profile download information (an activation code).

In step 1607, the BOSS system 1034 sends the activation code (Activation Code) to the authorization server 1031.

In step 1608, the authorization server 1031 sends the activation code (Activation Code) to the second device 102.

In step 1609, the second device 102 downloads the profile from the profile management server 1035 by using the activation code obtained in step 1608.

After the second device 102 downloads the profile and successfully activates the profile, the eUICC of the second device 102 takes effect, the old card (the UICC of the first device 101) becomes invalid, and the user may use the original phone number to perform a call service by using the second device 102.

Another embodiment of this application provides a terminal to implement various functions of the second device in FIG. 16. The terminal includes: a communications unit, an embedded UICC (eUICC), and a processor. The processor is configured to: control the communications unit to send a profile obtaining request to a server of a mobile operator network, where the profile obtaining request carries an embedded integrated circuit card identifier (EID) of the terminal and a mobile station international ISDN number MSISDN of a first device, and the EID is used by the terminal to obtain, from the server of the mobile operator network, profile download information that matches the EID; control the communications unit to send a verification code to the server of the mobile operator network, where the verification code is a verification code received by the first device; obtain the profile download information from the mobile operator server; and download a profile from a profile management server according to the profile download information, where the profile is installed in the embedded UICC (eUICC) of the terminal after the download is complete.

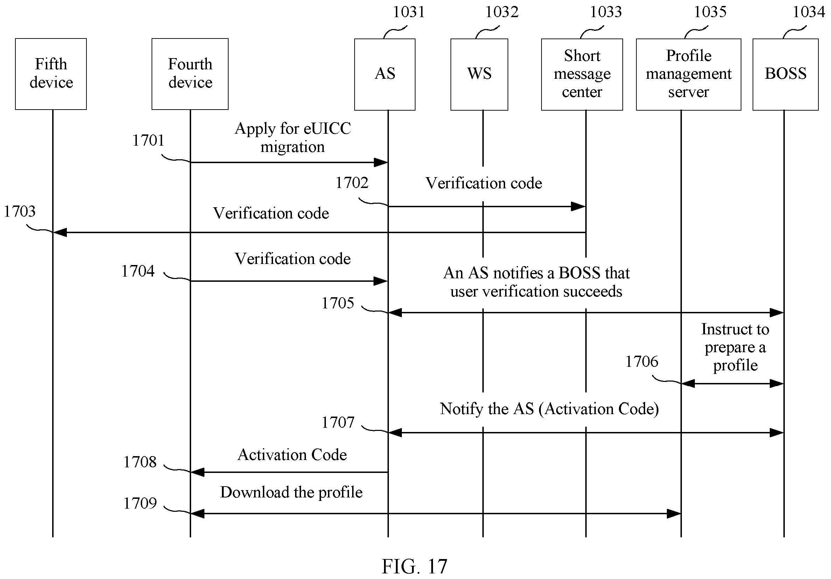

FIG. 17 is a schematic diagram of a profile download method according to another embodiment of this application.

In FIG. 17, a fourth device and a fifth device belong to a same user. Both the fourth device and the fifth device use an embedded UICC (eUICC) that replaces a UICC and that is embedded into the device in an irremovable manner.

The fifth device has previously accessed a network of an MNO 103, for example, the eUICC of the fifth device downloads a profile and activates a communication service of the MNO 103. The user may use the network and an application service of the MNO 103 by using the fifth device. The fourth device is a device newly purchased by the user for replacing the old fifth device, and the user wants to still use an original phone number after the device is replaced. After the fourth device receives an eUICC service migration request entered by the user, downloads the profile, and completes profile activation, the eUICC of the fourth device completes profile download and takes effect, and the profile of the eUICC of the fifth device becomes invalid. This is similar to a 4G card replacement service (that is, the user discards an old SIM card, and uses a new SIM card) in an existing service of the operator. However, both the fourth device and the fifth device herein use the embedded UICC (eUICC) that is embedded into the terminal and irremovable. Therefore, a procedure is different.

The fourth device sends a profile obtaining request (also referred to as an "eUICC migration request") to a server of a mobile operator network. The profile obtaining request carries an embedded integrated circuit card identifier (EID) of the fourth device and a mobile station international ISDN number MSISDN of the fifth device. The EID is used by the fourth device to obtain, from the server of the mobile operator network, profile download information that matches the EID. The fourth device sends a verification code to the server of the mobile operator network. The verification code is a verification code received by the fifth device (for example, the user may use the fourth device to manually enter the verification code received by the fifth device, or the user may use the fifth device to obtain, by using short-range communication (for example, NFC) or in a manner of scanning a quick response code, the verification code received by the fourth device). The fourth device receives the profile download information from the mobile operator server. The fourth device downloads the profile from a profile management server according to the profile download information. The profile is installed in the embedded UICC (eUICC) of the fourth device after the download is complete.

Referring to FIG. 17, in step 1701, the fourth device sends an "eUICC migration" request to an authorization server 1031. The "eUICC migration" request carries the mobile station international ISDN number MSISDN of the user and the embedded integrated circuit card identifier (EID) of the fourth device.

Step 1702 to step 1709 are similar to step 1602 to step 1609 in FIG. 16, and details are not described herein.

After the fourth device downloads and successfully activates the profile, the eUICC of the fourth device takes effect, the profile of the eUICC of the fifth device becomes invalid, and the user may use the original phone number to perform a communication service (a call or an SMS message) by using the fourth device.

An embodiment of this application provides a terminal to implement various functions of the fourth device in FIG. 17. The terminal includes: a communications unit, an embedded UICC (eUICC), and a processor. The processor is configured to: control the communications unit to send a profile obtaining request to a server of a mobile operator network, where the profile obtaining request carries an embedded integrated circuit card identifier (EID) of the terminal and a mobile station international ISDN number MSISDN of a fifth device, and the EID is used by the terminal to obtain, from the server of the mobile operator network, profile download information that matches the EID; control the communications unit to send a verification code to the server of the mobile operator network, where the verification code is a verification code received by the fifth device; obtain the profile download information from the mobile operator server; and download a profile from a profile management server according to the profile download information, where the profile is installed in the embedded UICC (eUICC) of the terminal after the download is complete.

In the device that is configured to implement this application, the processor may be a general purpose processor, a digital signal processor (DSP), an application-specific integrated circuit (ASIC), a field programmable gate array (FPGA), or another programmable logic device, a transistor logic device, a hardware component, or any combination thereof. The processor may implement or execute various examples of logical blocks, modules, and circuits that are described with reference to content disclosed in this application.

Method or algorithm steps described in combination with the content disclosed in this application may be implemented by hardware, or may be implemented by a processor by executing a software instruction. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. A person skilled in the art should easily be aware that, units and algorithm steps in the examples described with reference to the embodiments disclosed in this specification may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of this application are further described in detail in the foregoing specific embodiments. It should be understood that the foregoing descriptions are merely specific embodiments of this application, but are not intended to limit the protection scope of this application which is defined by the claims.

## Claims

1. A system, comprising:
a first device (101); and
a second device (102); wherein a universal integrated circuit card, UICC, is installed in the first device, an embedded UICC, eUICC, is embedded into the second device; and wherein the second device is configured to:
send (1601) a profile obtaining request to a server (1031) of a mobile operator network, wherein the profile obtaining request comprises an embedded integrated circuit card identifier, EID, of the second device and a mobile station international ISDN number, MSISDN, of the first device;
obtain a verification code which has been received by the first device, and send (1604) the verification code to the server; and
obtain (1608) profile download information from the server of the mobile operator network when the server successfully verifies the verification code, wherein the profile download information matches the EID;
download (1609) a profile from a profile management server (1035) according to the profile download information, and install the profile into the eUICC of the second device after the download is complete, wherein the eUICC of the second device takes effect and the UICC of the first device becomes invalid; and wherein the first device is configured to:
receive (1603), from a short message center (1033), the verification code in an SMS message manner.

2. The system according to claim 1, wherein in order to obtain the verification code which has been received by the first device, the second device is configured to:
receive the verification code manually entered by a user, or
receive the verification code from the first device by using a short-range communication, or
obtain the verification code by scanning a quick response code.

3. The system according to any one of claims 1 to 2, wherein the profile download information comprises an activation code.

4. A second device (102), wherein the second device comprises a communication unit, an embedded UICC, eUICC, and a processor; and wherein
the processor is configured to:
control the communications unit to send (1601) a profile obtaining request to a server (1031) of a mobile operator network, where the profile obtaining request comprises an embedded integrated circuit card identifier, EID, of the second device and a mobile station international ISDN number, MSISDN, of a first device, wherein a UICC is installed in the first device;
obtain a verification code which has been received by the first device, and send (1604) the verification code to the server; and
obtain (1608) profile download information from the server of the mobile operator network when the server successfully verifies the verification code, wherein the profile download information matches the EID; and
download (1609) a profile from a profile management server (1035) according to the profile download information, and install the profile into the eUICC of the second device after the download is complete, wherein the eUICC of the second device takes effect and the UICC of the first device becomes invalid.

5. A system, comprising:
a first device (101); and
a second device (102); wherein a first embedded universal integrated circuit card, eUICC, is embedded into the first device, and a second eUICC is embedded into the second device; and wherein
the second device is configured to:
send (1701) a profile obtaining request to a server (1031) of a mobile operator network, wherein the profile obtaining request comprises an embedded integrated circuit card identifier, EID, of the second device and a mobile station international ISDN number, MSISDN, of the first device;
obtain a verification code which has been received by the first device and send (1704) the verification code to the server; and
obtain (1708) profile download information from the server of the mobile operator network when the server successfully verifies the verification code, wherein the profile download information matches the EID;
download (1709) a profile from a profile management server (1035) according to the profile download information, and install the profile into the second eUICC of the second device after the download is complete, wherein the second eUICC of the second device takes effect and the first eUICC of the first device becomes invalid; and wherein
the first device is configured to:
receive (1703), from a short message center (1033) the verification code in an SMS message manner.

6. A device, wherein the device comprises a communication unit, a universal integrated circuit card, UICC, and an embedded UICC, eUICC, and a processor; and wherein
the device is configured to:
perform (1401) an authentication operation with a mobile network operator, MNO, to
verify (1401) validity of the device by using the UICC of the device;
apply (1402) to said mobile network operator, MNO, for a profile for the eUICC of the device by providing an eUICC identifier, EID, of the device;
receive (1405), from the MNO, a profile activation code that matches the EID;
download (1406) the profile from a profile management server.

7. The device according to claim 6, wherein the device is further configured to:
apply (1402) to the MNO for both the profile and a multiple IMSI single MSISDN service; and wherein
the UICC and the eUICC of the device share one MSISDN number after the multiple IMSI single MSISDN service is activated.

8. The device according to any one of claims 6-7, wherein the authentication operation uses a verification code method, or uses SIM card-based EAP-SIM/AKA authentication.

## Patentansprüche

1. System, das Folgendes umfasst:
eine erste Vorrichtung (101); und
eine zweite Vorrichtung (102); wobei eine universelle Integrierte-Schaltung-Karte, UICC, in der ersten Vorrichtung installiert ist, eine eingebettete UICC, eUICC, in die zweite Vorrichtung eingebettet ist; und wobei die zweite Vorrichtung zu Folgendem ausgelegt ist:
Senden (1601) einer Profilerhalteanforderung an einen Server (1031) eines Mobilfunkbetreibernetzes, wobei die Profilerhaltungsanforderung eine Kennung einer eingebetteten Integrierte-Schaltung-Karte, EID, der zweiten Vorrichtung und eine internationale Mobilstations-ISDN-Nummer, MSISDN, der ersten Vorrichtung umfasst;
Erhalten eines Verifizierungscodes, der durch die erste Vorrichtung empfangen wurde, und Senden (1604) des Verifizierungscodes an den Server; und
Erhalten (1608) von Profildownloadinformationen von dem Server des Mobilfunkbetreibernetzes, wenn der Server den Verifizierungscode erfolgreich verifiziert, wobei die Profildownloadinformationen mit der EID übereinstimmen;
Herunterladen (1609) eines Profils von einem Profilverwaltungsserver (1035) gemäß den Profildownloadinformationen und Installieren des Profils in der eUICC der zweiten Vorrichtung nach Abschluss des Downloads, wobei die eUICC der zweiten Vorrichtung wirksam wird und die UICC der ersten Vorrichtung ungültig wird; und wobei die erste Vorrichtung zu Folgendem ausgelegt ist:
Empfangen (1603), von einem Kurznachrichtenzentrum (1033), des Verifizierungscodes mittels einer SMS-Nachricht.

2. System nach Anspruch 1, wobei die zweite Vorrichtung, um den Verifizierungscode zu erhalten, der durch die erste Vorrichtung empfangen wurde, zu Folgendem ausgelegt ist:
Empfangen des durch einen Benutzer manuell eingegebenen Verifizierungscodes oder
Empfangen des Verifizierungscodes von der ersten Vorrichtung unter Verwendung einer Kurzstreckenkommunikation oder Erhalten des Verifizierungscodes durch Scannen eines "Quick-Response"-Codes.

3. System nach einem der Ansprüche 1 bis 2, wobei die Profildownloadinformationen einen Aktivierungscode umfassen.

4. Zweite Vorrichtung (102), wobei die zweite Vorrichtung eine Kommunikationseinheit, eine eingebettete UICC, eUICC, und einen Prozessor umfasst; und wobei
der Prozessor zu Folgendem ausgelegt ist:
Steuern der Kommunikationseinheit zum Senden (1601) einer Profilerhalteanforderung an einen Server (1031) eines Mobilfunkbetreibernetzes, wobei die Profilerhaltungsanforderung eine Kennung einer eingebetteten Integrierte-Schaltung-Karte, EID, der zweiten Vorrichtung und eine internationale Mobilstations-ISDN-Nummer, MSISDN, einer ersten Vorrichtung umfasst, wobei eine UICC in der ersten Vorrichtung installiert ist;
Erhalten eines Verifizierungscodes, der durch die erste Vorrichtung empfangen wurde, und Senden (1604) des Verifizierungscodes an den Server; und
Erhalten (1608) von Profildownloadinformationen von dem Server des Mobilfunkbetreibernetzes, wenn der Server den Verifizierungscode erfolgreich verifiziert, wobei die Profildownloadinformationen mit der EID übereinstimmen; und
Herunterladen (1609) eines Profils von einem Profilverwaltungsserver (1035) gemäß den Profildownloadinformationen und Installieren des Profils in der eUICC der zweiten Vorrichtung nach Abschluss des Downloads, wobei die eUICC der zweiten Vorrichtung wirksam wird und die UICC der ersten Vorrichtung ungültig wird.

5. System, das Folgendes umfasst:
eine erste Vorrichtung (101); und
eine zweite Vorrichtung (102); wobei eine erste eingebettete universelle Integrierte-Schaltung-Karte, eUICC, in die erste Vorrichtung eingebettet ist und eine zweite eUICC in die zweite Vorrichtung eingebettet ist; und wobei
die zweite Vorrichtung zu Folgendem ausgelegt ist:
Senden (1701) einer Profilerhalteanforderung an einen Server (1031) eines Mobilfunkbetreibernetzes, wobei die Profilerhaltungsanforderung eine Kennung einer eingebetteten Integrierte-Schaltung-Karte, EID, der zweiten Vorrichtung und eine internationale Mobilstations-ISDN-Nummer, MSISDN, der ersten Vorrichtung umfasst;
Erhalten eines Verifizierungscodes, der durch die erste Vorrichtung empfangen wurde, und Senden (1704) des Verifizierungscodes an den Server; und
Erhalten (1708) von Profildownloadinformationen von dem Server des Mobilfunkbetreibernetzes, wenn der Server den Verifizierungscode erfolgreich verifiziert, wobei die Profildownloadinformationen mit der EID übereinstimmen;
Herunterladen (1709) eines Profils von einem Profilverwaltungsserver (1035) gemäß den Profildownloadinformationen und Installieren des Profils in der zweiten eUICC der zweiten Vorrichtung nach Abschluss des Downloads, wobei die zweite eUICC der zweiten Vorrichtung wirksam wird und die erste eUICC der ersten Vorrichtung ungültig wird; und wobei
die erste Vorrichtung zu Folgendem ausgelegt ist:
Empfangen (1703), von einem Kurznachrichtenzentrum (1033), des Verifizierungscodes mittels einer SMS-Nachricht.

6. Vorrichtung, wobei die Vorrichtung eine Kommunikationseinheit, eine universelle Integrierte-Schaltung-Karte, UICC, und eine eingebettete UICC, eUICC, und einen Prozessor umfasst; und wobei
die Vorrichtung zu Folgendem ausgelegt ist:
Durchführen (1401) einer Authentifizierungsoperation mit einem Mobilfunknetzbetreiber, MNO, um die Gültigkeit der Vorrichtung zu verifizieren (1401), unter Verwendung der UICC der Vorrichtung;
Beantragen (1402), bei dem Mobilfunknetzbetreiber, MNO, eines Profils für die eUICC der Vorrichtung durch Bereitstellen einer eUICC-Kennung, EID, der Vorrichtung;
Empfangen (1405), von dem MNO, eines Profilaktivierungscodes, der mit der EID übereinstimmt;
Herunterladen (1406) des Profils von einem Profilverwaltungsserver.

7. Elektronische Vorrichtung nach Anspruch 6, wobei die Vorrichtung ferner zu Folgendem ausgelegt ist:
Beantragen (1402), bei dem MNO, sowohl des Profils als auch eines Mehrfach-IMSI-Einzel-MSISDN-Dienstes; und wobei
sich die UICC und die eUICC der Vorrichtung nach Aktivierung des Mehrfach-IMSI-Einzel-MSISDN-Dienstes eine MSISDN-Nummer teilen.

8. Vorrichtung nach einem der Ansprüche 6-7, wobei die Authentifizierungsoperation ein Verifizierungscodeverfahren verwendet oder eine SIM-Karten-basierte EAP-SIM/AKA-Authentifizierung verwendet.

## Revendications

1. Système comprenant :
un premier dispositif (101) ; et
un deuxième dispositif (102) ; une carte à circuit intégré universel, UICC, étant installée dans le premier dispositif, une UICC embarquée, eUICC, étant embarquée dans le deuxième dispositif ; et le deuxième dispositif étant configuré pour :
envoyer (1601) une demande d'obtention de profil auprès d'un serveur (1031) d'un réseau d'opérateur mobile, dans lequel la demande d'obtention de profil comprend un identifiant de carte à circuit intégré embarquée, EID, du deuxième dispositif et un numéro ISDN international de station mobile, MSISDN, du premier dispositif ;
obtenir un code de vérification qui a été reçu par le premier dispositif, et envoyer (1604) le code de vérification au serveur ; et
obtenir (1608) des informations de téléchargement de profil à partir du serveur du réseau d'opérateur mobile lorsque le serveur vérifie avec succès le code de vérification, dans lequel les informations de téléchargement de profil correspondent à l'EID ;
télécharger (1609) un profil depuis un serveur de gestion de profil (1035) en fonction des informations de téléchargement de profil, et installer le profil dans l'eUICC du deuxième dispositif une fois le téléchargement terminé, l'eUICC du deuxième dispositif prenant effet et l'UICC du premier dispositif devenant non valide ; et le premier dispositif étant configuré pour :
recevoir (1603), depuis un centre de messages courts (1033), le code de vérification par message SMS.

2. Système selon la revendication 1, dans lequel, pour obtenir le code de vérification qui a été reçu par le premier dispositif, le deuxième dispositif est configuré pour :
recevoir le code de vérification saisi manuellement par un utilisateur, ou
recevoir le code de vérification du premier dispositif en utilisant une communication à courte portée, ou obtenir le code de vérification en scannant un QR code.

3. Système selon l'une quelconque des revendications 1 et 2, les informations de téléchargement de profil comprenant un code d'activation.

4. Deuxième dispositif (102), le deuxième dispositif comprenant une unité de communication, une UICC embarquée, eUICC, et un processeur ; et dans lequel
le processeur est configuré pour :
contrôler l'unité de communications pour envoyer (1601) une demande d'obtention de profil à un serveur (1031) d'un réseau d'opérateur mobile, dans lequel la demande d'obtention de profil comprend un identifiant de carte à circuit intégré embarquée, EID, du deuxième dispositif et un numéro international ISDN de station mobile, MSISDN, d'un premier dispositif, dans lequel une UICC est installée dans le premier dispositif ;
obtenir un code de vérification qui a été reçu par le premier dispositif, et envoyer (1604) le code de vérification au serveur ; et
obtenir (1608) des informations de téléchargement de profil à partir du serveur du réseau d'opérateur mobile lorsque le serveur vérifie avec succès le code de vérification, dans lequel les informations de téléchargement de profil correspondent à l'EID ; et
télécharger (1609) un profil depuis un serveur de gestion de profil (1035) en fonction des informations de téléchargement de profil, et installer le profil dans l'eUICC du deuxième dispositif une fois le téléchargement terminé, l'eUICC du deuxième dispositif prenant effet et l'UICC du premier dispositif devenant non valide.

5. Système comprenant :
un premier dispositif (101) ; et
un deuxième dispositif (102) ; dans lequel une première carte à circuit intégré universel embarquée, eUICC, est embarquée dans le premier dispositif, et une deuxième eUICC est embarquée dans le deuxième dispositif ; et dans lequel
le deuxième dispositif est configuré pour :
envoyer (1701) une demande d'obtention de profil auprès d'un serveur (1031) d'un réseau d'opérateur mobile, dans lequel la demande d'obtention de profil comprend un identifiant de carte à circuit intégré embarquée, EID, du deuxième dispositif et un numéro ISDN international de station mobile, MSISDN, du premier dispositif ;
obtenir un code de vérification qui a été reçu par le premier dispositif, et envoyer (1704) le code de vérification au serveur ; et
obtenir (1708) des informations de téléchargement de profil à partir du serveur du réseau d'opérateur mobile lorsque le serveur vérifie avec succès le code de vérification, dans lequel les informations de téléchargement de profil correspondent à l'EID ;
télécharger (1709) un profil depuis un serveur de gestion de profil (1035) en fonction des informations de téléchargement de profil, et installer le profil dans la deuxième eUICC du deuxième dispositif une fois le téléchargement terminé, la deuxième eUICC du deuxième dispositif prenant effet et la première UICC du premier dispositif devenant non valide ; et dans lequel
le premier dispositif électronique est configuré pour :
recevoir (1703), depuis un centre de messages courts (1033), le code de vérification par message SMS.

6. Dispositif, le dispositif comprenant une unité de communication, une carte à circuit intégré universel, UICC, et une UICC embarquée, eUICC, et un processeur ; et dans lequel
le dispositif est configuré pour :
exécuter (1401) une opération d'authentification auprès d'un opérateur de réseau mobile, MNO, afin de vérifier (1401) la validité du dispositif en utilisant l'UICC du dispositif ;
appliquer (1402) audit opérateur de réseau mobile, MNO, un profil pour l'eUICC du dispositif en fournissant un identifiant d'eUICC, EID, du dispositif ;
recevoir (1405), du MNO, un code d'activation de profil correspondant à l'EID ;
télécharger (1406) le profil depuis un serveur de gestion de profils.

7. Dispositif selon la revendication 6, le dispositif étant en outre configuré pour :
soumettre (1402) au MNO une demande concernant à la fois le profil et un service à IMSI multiples associé à un MSISDN unique ; et dans lequel
l'UICC et l'eUICC du dispositif partagent un même numéro MSISDN après l'activation du service à IMSI multiples associé à un MSISDN unique.

8. Dispositif selon l'une quelconque des revendications 6 et 7, dans lequel l'opération d'authentification utilise un procédé de code de vérification, ou utilise une authentification EAP-SIM/AKA basée sur une carte SIM.
